Europäisches Patentamt

European Patent Office

Office européen des brevets

(11) Numéro de publication: **0 123 759**
A1

## (12) DEMANDE DE BREVET EUROPEEN

(21) Numéro de dépôt: 83430016.2

(22) Date de dépôt: 29.04.83

(51) Int. Cl.³: **G 01 B 5/20, H 02 G 1/10**

(43) Date de publication de la demande: 07.11.84
Bulletin 84/45

(71) Demandeur: **TRAVOCEAN Société à Responsabilité Limitée dite, 148, rue Sainte, F-13007 Marseille (FR)**

(72) Inventeur: **Gempp, Albert, 379, Boulevard Grignan, F-83000 - Toulon (FR)**

(74) Mandataire: **Moretti, René et al, C/O Cabinet BEAU DE LOMENIE 14, rue Raphael, F-13008 Marseille (FR)**

(84) Etats contractants désignés: **BE DE FR GB IT NL SE**

(54) Procédé et dispositif pour contrôler la courbure d'un câble ou d'une conduite flexible, à l'extérieur d'un organe de manutention de celui-ci.

(57) La présente invention a pour objet un procédé et un dispositif pour contrôler la courbure d'un câble ou d'une conduite flexible (23) à l'extérieur d'on organe de manutention (1) de celui-ci, caractérisé par les opérations suivantes:
— on mesure les variations d'au moins deux points (23a/23b) pris sur la longueur du câble ou flexible (23) à l'extérieur dudit organe de manutention (1);
— on compare cette mesure par rapport à un seuil donné sur au moins une échelle de référence (18c/21b) et correspondant au rayon de courbure minimum pouvant être accusé par le câble (23);
— et on apporte une correction pendant la manutention du câble pour maintenir cette mesure au-dessous de ce seuil.

Procédé et dispositif pour contrôler la courbure d'un câble ou d'une conduite flexible à l'extérieur d'un organe de manutention de celui-ci.

La présente invention a pour objet un procédé et un dispositif pour contrôler la courbure d'un câble ou d'une conduite flexible à l'extérieur d'un organe de manutention de celui-ci.

Le secteur technique de l'invention est celui des appareillages de contrôle trouvant leur application lors de la manutention des câbles ou conduites flexibles et notamment des câbles électriques étanches destinés à être enfouis dans le sol marin.

On sait que l'étanchéité des câbles sous-marins est notamment réalisée par une gaine de plomb qui entoure les conducteurs. Ces câbles sont lourds et compte tenu de leur relative rigidité, ne peuvent accuser des courbures excessives dans dommages.

Lors de leur manutention à la sortie d'un davier ou d'un bras de relevage par exemple, la courbure des câbles ou flexibles se produisant à l'extérieur peut dépasser une limite admissible et provoquer leur détérioration.

La présente invention vise à remédier à cet inconvénient.

L'objectif à atteindre est un appareillage de contrôle de la courbure d'un câble ou d'un flexible à l'extérieur d'un organe de manutention, comportant des moyens visuels donnant en continu l'indication de la déformation du câble afin que l'on puisse intervenir pendant sa manutention et apporter une correction pour maintenir le câble ou le flexible à une courbure compatible avec ses caractéristiques.

Cet objectif est atteint par le procédé pour contrôler la courbure d'un câble à l'extérieur d'un organe de manutention de ce câble, caractérisé par les opérations suivantes :

- on mesure les déplacements d'au moins deux points pris sur la longueur du câble à l'extérieur dudit organe de manutention;

- on compare chacune de ces mesures à un seuil donné sur au moins une échelle de référence et correspondant au rayon de courbure minimum pouvant être accusé par le câble;

- et on apporte une correction pendant la manutention du câble pour maintenir cette mesure au-dessous de ce seuil.

Cet objectif est également atteint par le dispositif selon l'invention pour contrôler la courbure d'un câble ou conduite flexible à l'extérieur d'un organe de manutention de celui-ci, caractérisé en ce qu'il se compose d'une structure comportant au moins un bras articulé par une de ses extrémités audit organe, laquelle structure comporte un premier palpeur situé à son extrémité libre et un deuxième palpeur porté par au moins un bras articulé à ladite extrémité, lesquels palpeurs sont espacés l'un de l'autre et mis au contact dudit câble par le dessus et comportent des moyens de mesure de leur déplacement relatif par rapport à une échelle de référence donnant un seuil maximum correspondant au rayon de courbure minimum pouvant être accusé par le câble, en vue d'apporter une correction pendant la manutention du câble pour que son rayon de courbure n'atteigne en aucun cas ce minimum.

Dans un mode de réalisation, le dispositif se compose d'une structure comportant deux bras articulés par une de leurs extrémités audit organe de manutention du câble et reliés à leur autre extrémité par une traverse, laquelle constitue ledit premier palpeur et est articulée auxdits bras, lequel premier palpeur comporte deux bras reliés à leur extrémité libre par une traverse qui constitue le deuxième palpeur. Un des bras qui porte chacun desdits palpeurs comporte lesdits moyens de mesure de leur déplacement angulaire.

Dans un mode d'exécution ledit deuxième palpeur est situé entre le premier palpeur et l'organe de manutention du câble.

Les bras qui portent lesdits palpeurs sont parallèles entre eux et les palpeurs sont également parallèles entre eux et sont cylindriques. L'axe d'articulation de ladite structure est perpendiculaire à l'axe longitudinal de l'organe de manutention du câble et s'étend dans une direction sensiblement horizontale, de telle sorte que lesdits palpeurs se déplacent dans des directions sensiblement verticales.

L'un des bras qui porte le premier palpeur et l'un des bras qui porte le second palpeur se prolongent chacun du côté de l'organe de manutention du câble, par une tige dont l'extrémité libre se déplace au niveau d'un secteur fixé audit organe.

Lesdites tiges sont portées par les bras desdits palpeurs qui sont situés d'un même côté de l'organe de manutention du câble.

Ces tiges sont montées réglables sur lesdits bras pour permettre l'étalonnage du dispositif en fonction du rayon de courbure minimal admissible du câble. L'un des bras qui porte le deuxième palpeur se prolonge sensiblement jusqu'à l'axe d'articulation des bras dudit premier palpeur et chacune desdites tiges est fixée à une platine réglable en rotation sur lesdits bras et située au niveau de l'axe d'articulation des bras qui portent le premier palpeur.

Ces tiges comportent à leur extrémité libre un curseur constitué par un fer plat perpendiculaire à la tige et chaque curseur est
cintré suivant le rayon d'articulation de chacune des tiges. Lesdits
curseurs sont l'un à côté de l'autre et sont situés sur le côté dudit
secteur fixe, lequel est cintré dans le même sens et sensiblement suivant la même courbure du curseur qui lui est le plus rapproché.

La face convexe du secteur fixe et la face convexe de chacun
des curseurs comporte une ligne de référence transversale. Les zones
situées de part et d'autre de la ligne de référence du secteur et du
curseur qui lui est le plus rapproché sont de couleurs contrastées.

Le résultat de l'invention est un appareil pour contrôler en
continu la courbure d'un câble à l'extérieur d'un organe de manutention de ce câble afin que celui-ci n'atteigne en aucune façon un rayon
de courbure minimum au-dessous duquel il pourrait subir des dommages.

Une application de l'appareil de contrôle selon l'invention
est l'équipement d'un dispositif pour mettre en place un câble dans
une tranchée pratiquée au fond de la mer décrit dans la demande de
brevet européenne 82 430001.6 publiée sous le No 0.056778. Ce dispositif comporte à l'avant deux bras de manutention des câbles situés
de part et d'autre d'un habitacle. Ces bras, encore appelés bras de
détentionnement,permettent d'enterrer les câbles dans leur état détendu. Sur une telle machine, le dispositif de contrôle de la courbure
des câbles selon la présente invention, est monté à l'extrémité libre
de chaque bras de détentionnement.Les secteurs et les curseurs reliés
aux palpeurs sont en permanence sous la vue du conducteur de la machine qui se trouve dans ledit habitacle.

L'usage de curseurs et de secteurs comportant des plages
de couleurs contrastées en améliore la visualisation dans le milieu
aquatique.

On précise toutefois que cette application n'est pas limitative, l'appareil pouvant équiper tous autres organes de manutention
de câbles.

D'autres avantages et les caractéristiques de l'invention
ressortiront encore à la lecture de la description suivante d'un mode
de réalisation dudit dispositif de contrôle en référence au dessin
annexé sur lequel :

- la figure 1 est une vue en élévation d'un dispositif selon
l'invention équipant un bras de manutention d'une machine pour enterrer les câbles au fond de la mer;

- la figure 2 est une vue de dessus du dispositif de la figure 1;

- la figure 3 est une vue en coupe suivant la ligne III III de la figure 2;

- la figure 4 est une vue en perspective partielle illustrant les moyens de contrôle visuels du déplacement des palpeurs qui équipent le dispositif.

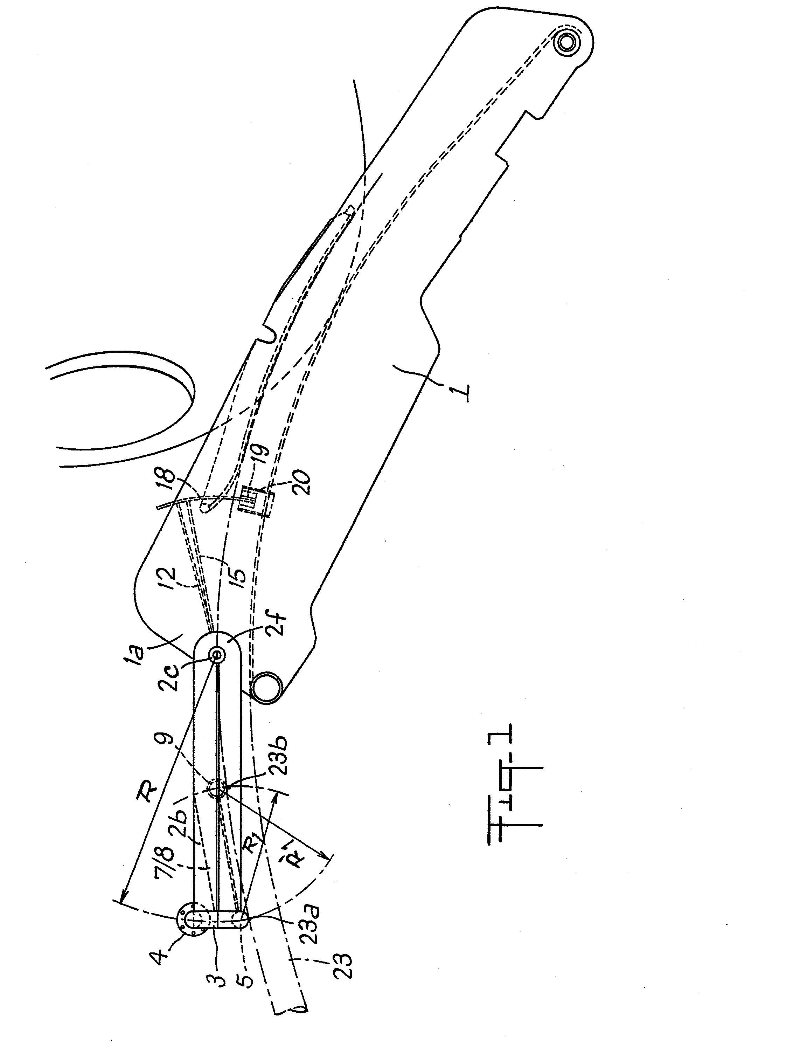

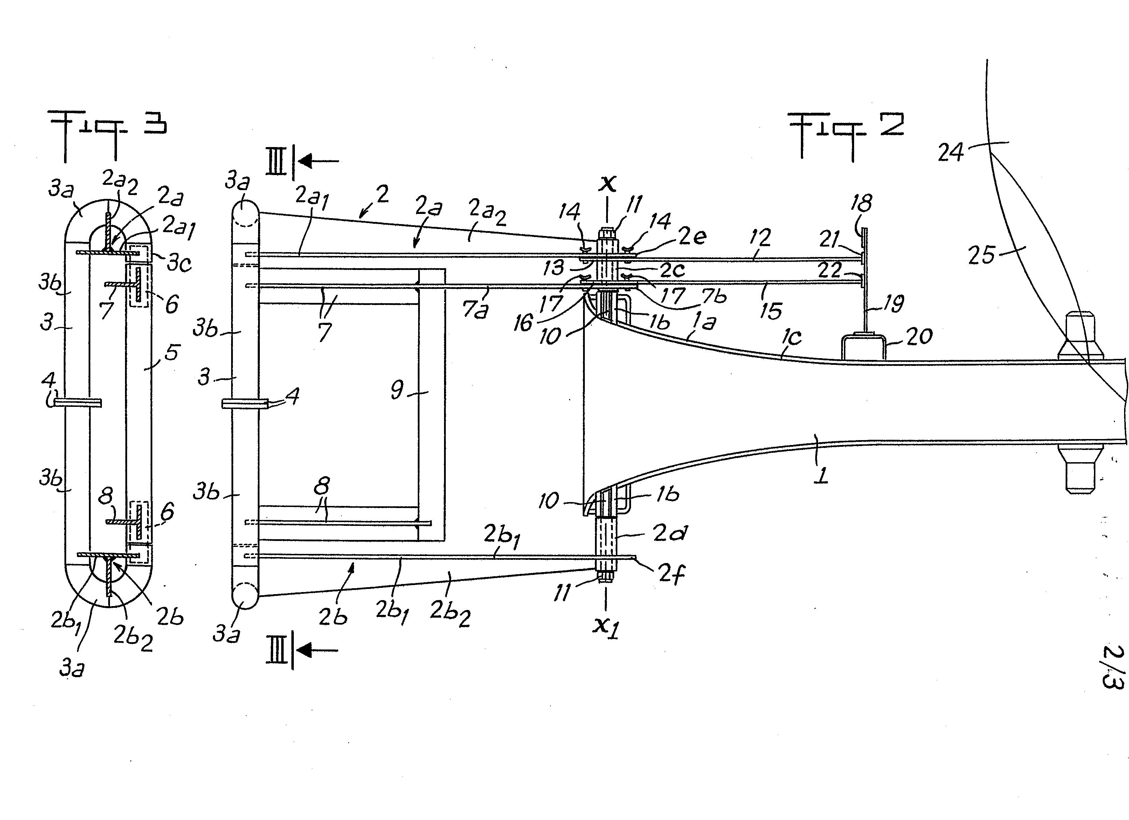

Le dispositif selon l'invention est par exemple articulé à l'extrémité libre la d'un bras de manutention de câble 1, tel qu'illusté aux figures 1 et 2.

Il se compose d'une structure 2 comportant deux bras 2a/2b, lesquels sont parallèles entre eux et sont de même longueur. Les deux bras 2a/2b sont par exemple réalisés en mécano-soudure et sont d'une section droite en T. Les deux bras 2a/2b sont reliés ensemble à l'une de leurs extrémités par une monture 3, réalisée à partir d'éléments de tubes cylindriques. Cette monture comporte deux coudes à 180° 3a, dont une extrémité est prolongée par une partie de tube 3b fermée par une bride pleine 4 et dont l'autre comporte une manchette 3c. Les brides 4 se situent dans l'axe médian de la structure 2 et sont assemblées l'une à l'autre par des boulons de serrage. Les bras 2a/2b sont fixés à la monture 3 par soudage. Chaque bras se compose d'une âme $2a_1/2b_1$ soudée aux parties de tube 3b et aux manchettes 3c et une aile $2a_2/2b_2$ soudée aux coudes 3a. La monture 3 est ainsi perpendiculaire aux bras 2a/2b. Les manchettes 3c sont disposées face à face et constituent des paliers dans lesquels est montée articulée une traverse 5. Cette traverse est réalisée à partir d'un tube cylindrique et comporte à ses extrémités des axes 6, encastrés dans le tube et solidarisés par soudage ou par tout autre moyen équivalent. Les axes 6 dépassent les extrémités du tube 5 et sont engagés dans les paliers 3c. La traverse 5 constitue un des palpeurs qui équipent le dispositif et qui a été appelé "premier palpeur" dans les revendications.

Ladite traverse 5 comporte deux bras 7/8 constitués par des fers profilés en T parallèles entre eux et s'étendant perpendiculairement à partir de la traverse. Ces bras sont fixés du côté des extrémités de celle-ci. Le bras 7 est rapproché du bras 2a de la structure 2, le bras 8, du bras 2b de ladite structure.

Les deux bras 7/8 sont de même longueur et portent à leur extrémité libre une traverse 9, réalisée à partir d'un tube cylindrique et qui est solidarisée auxdits bras 7/8 par soudage. La traverse 9 constitue un autre palpeur que l'on a appelé "deuxième palpeur" dans les revendications. Les palpeurs 5 et 9 sont, tel que représenté à la figure 2 du dessin, parallèles entre eux.

Chacun des bras 2a/2b comportent à leur autre extrémité une douille 2c/2d. Ces douilles sont passées à travers un orifice circulaire pratiqué dans l'âme $2a_1/2b_1$ des bras et sont solidarisées par soudage. Une partie desdites douilles est située du côté extérieur de la structure et est soudée à l'aile $2a_2/2b_2$ , l'autre partie est plus longue et s'étend à l'intérieur de la structure. Ces douilles sont en vis à vis et sont coaxiales. Elles constituent des paliers dans lesquels sont engagés des axes 10 d'articulation encastrés dans des bossages 1b, solidaires des parois latérales du bras de relevage 1.Les axes 10 sont filetés à leur extrémité pour recevoir un écrou 11 qui a pour fonction de maintenir la structure 2 en translation sur le bras 1, tout en autorisant son articulation dans le sens vertical.

Suivant le mode de réalisation illustré sur le dessin, le palpeur 9 est situé entre le palpeur 5 et l'axe d'articulation $XX_1$ de la structure 2 et sensiblement au milieu entre ledit palpeur et ledit axe.

Les extrémités 2e/2f des âmes $2a_1/2b_1$ des bras et qui comportent les douilles 2c/2d sont arrondies en demi-cercle de telle sorte que les douilles et les demi-cercles sont concentriques. L'extrémité 2e des bras 2a comporte, autour de la douille 2c et parallèlement à son bord arrondi, plusieurs trous 2g, par exemple neuf trous,qui traversent l'âme $2a_1$ et qui sont régulièrement répartis suivant un pas sur une demi-circonférence parallèle audit bord arrondi 2e. L'ensemble de ces trous est décalé de 45° dans le sens trigonométrique.

Le bras 2a porte une sorte d'aiguille de mesure constituée par une tige 12 s'étendant dans le plan et à partir du bord d'une platine 13. Cette platine adopte la forme d'un demi-cercle et est échancrée en son centre pour entourer la douille 2c. Les rayons de la platine 13 et du bord 2e du bras sont identiques, de telle sorte que la platine affleure le bord arrondi 2e dudit bras. La platine comporte des trous ovalisés 13a, par exemple au nombre de trois répartis sur une circonférence concentrique à son bord périphérique et correspondant à la circonférence sur laquelle sont répartis les trous 2g du

bras 2a. Des boulons à écrous à oreilles 14 sont passés dans les trous ovalisés 13a et dans certains des trous 2g pour assurer l'assemblage de l'aiguille 12 au bras 2a. Les trous ovalisés 13a permettent de réaliser le réglage en position de la tige 12 par rapport au bras 2a par rotation de la platine sur le bras.

Le bras 7 qui contribue à supporter le deuxième palpeur 9 sé prolonge du côté de l'axe d'articulation $XX_1$ de la structure 2 par un fer plat 7a, lequel s'étend parallèlement à l'âme $2a_1$ du bras 2a de ladite structure et aboutit au droit de la douille 2c. Ce prolongement 7a comporte une extrémité arrondie en quart de cercle 7b, laquelle extrémité est échancrée sensiblement selon une demi-circonférence 7e, laquelle entoure, en partie, la douille 2c de la structure 2, lorsque le prolongement 7a est rapproché de ladite douille. A son extrémité 7b, le prolongement 7a comporte plusieurs trous 7d régulièrement répartis sur une demi-circonférence 7e qui entoure l'échancrure 7c. Celle-ci, le bord arrondi 7b et la circonférence 7e sont concentriques.

Comme le bras 2a, le bras 7 porte à l'extrémité du prolongement 7a une aiguille de mesure 15 constituée par une tige fixée au bord d'une platine 16. Cette platine adopte la forme d'une fraction de cercle, par exemple sensiblement trois-quartsde cercle et est échancrée en son centre suivant une découpe circulaire de même rayon que l'échancrure 7c du prolongement 7a. Son bord périphérique courbe est de même rayon que le bord arrondi 7b et elle comporte deux trous ovalisés 16a situés sur une circonférence concentrique audit bord périphérique et correspondant à la circonférence 7e sur laquelle sont répartis les trous 7d du prolongement 7a. Des boulons à écrous à oreilles 17 sont passés à travers les trous ovalisés 16a et deux des trous 7d pour assurer la fixation de l'aiguille 15 au bras 7. Comme pour l'aiguille 12, les trous ovalisés 16a permettent de réaliser le réglage en position de la tige 15 par rapport au prolongement 7a, par rotation de la platine 16 sur le bras 7.

Les deux tiges 12/15 sont de même longueur et sont par exemple rectilignes. On notera que ces tiges peuvent, en fonction des caractéristiques du câble à manutentionner, adopter toute autre forme et être coudées.

Les tiges 12/15 aboutissent au niveau d'un secteur 18, lequel est fixé à un support 19, par exemple par soudure, lui-même fixé, par exemple au moyen de boulons à un étrier 20 en forme de U dont les extrémités des ailes sont soudées à l'une des parois latérales 1c du bras de manutention 1. Le support 19 s'étend parallèlement à l'axe d'articulation XX$_1$ de la structure 2 sur le bras 1. Le secteur 18 adopte la forme d'un fer plat et est fixé en étant appliqué sur le support 19 par son extrémité inférieure 18a. Il s'étend perpendiculairement audit support 19 et vers le haut et est cintré dans le sens longitudinal suivant un rayon de courbure sensiblement égal au rayon de la circonférende décrite par l'extrémité libre de la tige 12. Celle-ci porte un curseur 21, lequel est constitué par un plat fixé en son milieu à l'extrémité de ladite tige et s'étendant perpendiculairement à celle-ci. Le curseur 21 est cintré suivant la même courbure que le secteur 18 et la tige 12 est par exemple soudée à la face concave du curseur 21. Celui-ci se déplace sur le côté du secteur 18 et parallèlement à celui-ci.

La tige 15 comporte à son extrémité libre, comme la tige 12, un curseur 22 fixé de la même façon, lequel est sensiblement identique au curseur 21.

Ce curseur décrit une circonférence de plus grand rayon que celle décrite par le curseur 21. Il est situé à côté de celui-ci de telle sorte que le secteur 18, le curseur 21 et le curseur 22 sont situés sensiblement dans une même surface courbe s'étendant dans le sens transversal du bras de manutention 1.

Le secteur 18 comporte, sur sa face convexe 18b, une ligne de référence transversale 18c, qui délimite de part et d'autre deux plages 18d/18e. La plage 18d, située au-dessus de la ligne 18c est de couleur voyante, par exemple rouge, l'autre plage 18e est par exemple blanche.

Le curseur 21 comporte également sur sa face convexe 21a, une ligne de référence transversale 21b qui délimite deux plages 21c/21d. La plage 21c située au-dessus de la ligne 21a est, comme la plage 18d du secteur, de couleur rouge, l'autre plage 21b est de couleur blanche.

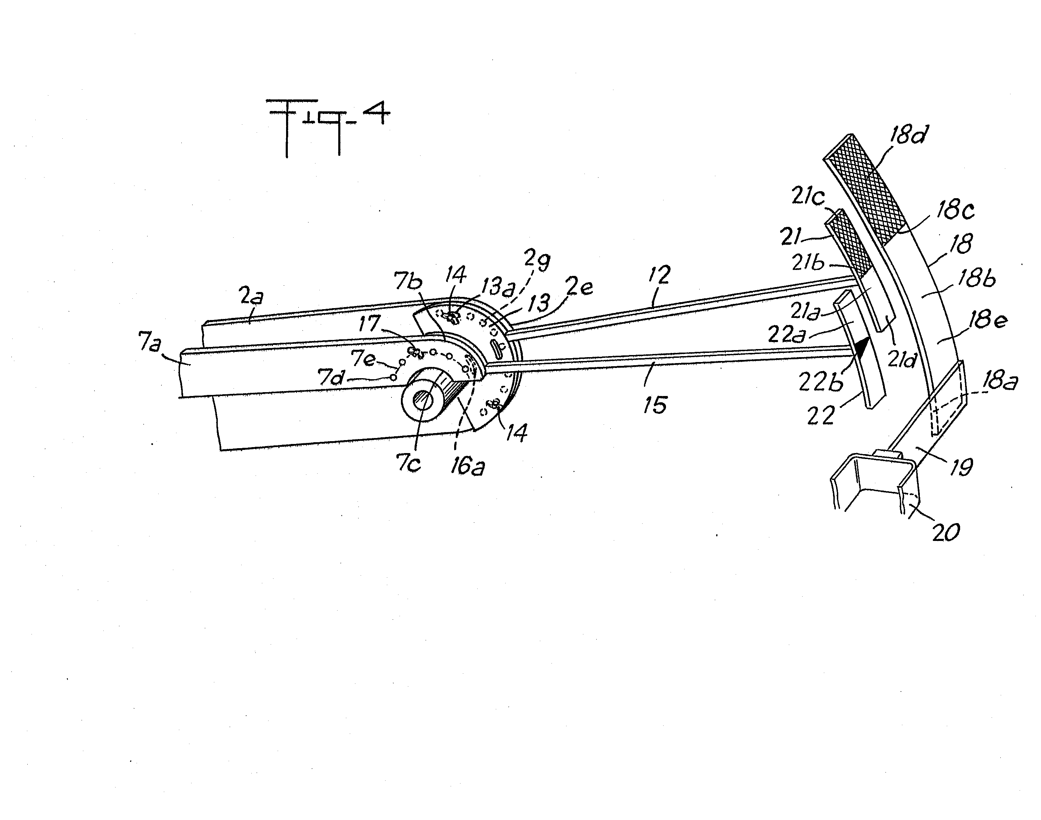

Le curseur 22 comporte sur sa face convexe 22a, un index 22b qui adopte par exemple la forme d'un trait transversal ou d'une flèche transversale, dont la pointe est dirigée du côté du curseur 21, tel que représenté sur la figure 4.

Le câble 23 s'étend à l'extérieur de l'extrémité libre 1a du bras de manutention 1 et présente une convexité orientée dans un même

8                    0123759

sens. Le câble 23 plonge en avant dudit bras.

La structure 2 composant le dispositif selon l'invention et articulée au bras 1 autour de l'axe $XX_I$, est située au-dessus du câble. Les palpeurs 5 et 9 sont ainsi en appui sur ledit câble et par le dessus.

L'aiguille 12, solidaire du bras 2a de la structure 2, décrit un arc de cercle parallèlement au secteur 18 lorsque la structure 2 s'articule autour de l'axe $XX_I$ et qu'elle pivote dans le sens vertical suivant un certain angle. Le palpeur 5 se déplace sur une circonférence de rayon R.

Lorsque la courbure du câble 23 s'accentue pour atteindre le rayon minimun admissible, l'aiguille 12 se déplace vers le haut dans le sens trigonométrique.

Le deuxième palpeur 9 articulé autour de l'axe longitudinal du premier palpeur 5, décrit un arc de cercle $R_I/R'_I$. Lorsque la courbure du câble 23 s'accentue, les points de contact 23a/23b des palpeurs se déplacent vers le bas. Le pivotement des bras 7/8 se produit autour du palpeur 9. Par rapport à celui-ci, le palpeur 5 décrit un arc de cercle de rayon $R'_I$, ce qui provoque le déplacement de l'aiguille 15 dans le sens trigonométrique.

Les moyens de mesure visuels sont étalonnés en fonction des caractéristiques du câble.

La ligne de référence 18c du secteur 18 donne la position limite du point 23a de contact du palpeur 5. La ligne de référence 21b du curseur 21 donne les variations du palpeur 5. Pour ne pas causer de dommages au câble, la ligne 21b ne doit pas se déplacer parallèlement à la plage 18d du secteur 18 et le bras de manutention 1 est manoeuvré pour maintenir la ligne 21b parallèlement à la plage 18e dudit secteur.

La ligne de référence 21b du curseur 21 donne la limite inférieure du rayon de courbure du câble par rapport au point de contact 23b du deuxième palpeur 9, relativement à la position du palpeur 5.

L'index 22b du curseur 22 donne les variations relatives des palpeurs 5 et 9. Si la courbure du câble 23 s'accentue, les points 23a/23b se déplacent vers le bas, le point 23a étant plus bas que le point 23b, l'aiguille 15 décrit un arc de cercle vers le haut. La ligne de référence 21b donne le seuil maximum à ne pas dépasser sans causer de dommages au câble. L'index 22b du curseur 22 se déplaçant parallèlement au curseur 21 doit être maintenu dans la plage 21d sans jamais atteindre la plage 21c dudit curseur.

Les opérations de manutention du câble sont suivies et commandées à partir de l'habitacle 24 à travers le hublot 25.

Comme cela est illustré à la figure 2 du dessin, les appareils de contrôle visuel 18/21/22 sont situés sur un des côtés du bras de manutention 1 et sont placés devant ledit hublot 25.

Dans le cas particulier de la machine ensouilleuse sous-marine décrite dans la demande de brevet européen 82 430001.6 et qui comporte deux bras de manutention, disposés symétriquement par rapport à l'axe longitudinal de la machine, lesdits appareils de contrôle sont situés à l'intérieur et entre les deux bras de manutention. Les larges plages des curseurs 21/22 et du secteur 18 de couleur voyante facilitent le contrôle de la courbure des câbles au cours de leur manutention.

# R E V E N D I C A T I O N S

1. Procédé pour contrôler la courbure d'un câble ou d'un flexible (23) à l'extérieur d'un organe de manutention (1) de celui-ci, caractérisé par les opérations suivantes :

- on mesure les déplacements d'au moins deux points (23a/23b) pris sur la longueur du câble ou flexible (23) à l'extérieur dudit organe de manutention (1);

- on compare chacune de ces mesures à un seuil donné sur au moins une échelle de référence (18c/21b) et correspondant au rayon de courbure minimum pouvant être accusé par le câble (23);

- et on apporte une correction pendant la manutention du câble pour maintenir cette mesure au-dessous de ce seuil.

2. Dispositif pour contrôler la courbure d'un câble ou d'un flexible (23) à l'extérieur d'un organe de manutention (1) de celui-ci, caractérisé en ce qu'il se compose d'une structure (2) comportant au moins un bras (2a) articulé par une de ses extrémités audit organe (1), laquelle structure (2) comporte un premier palpeur (5), situé à son extrémité libre, et un deuxième palpeur (9) porté par au moins un bras articulé (7/8) à ladite extrémité, lesquels palpeurs (5/9) sont espacés l'un de l'autre et mis au contact dudit câble (23) par le dessus et comportent des moyens de mesure (18/ 21/22) de leur déplacement relatif par rapport à une échelle de référence (18c/21b) donnant un seuil maximum correspondant au rayon de courbure minimum pouvant être accusé par le câble (23), en vue d'apporter une correction pendant la manutention du câble pour que son rayon de courbure n'atteigne en aucun cas ce minimum.

3. Dispositif selon la revendication 2, caractérisé en ce qu'il se compose d'une structure (2) comportant deux bras (2a/2b) articulés par une de leurs extrémités (2e/2f) audit organe de manutention (1) du câble et reliés à leur autre extrémité par une traverse (5), laquelle constitue ledit premier palpeur et est articulée auxdits bras (2a/2b), lequel premier palpeur (5) comporte deux bras (7/8) reliés à leur extrémité libre par une traverse (9) qui constitue ledit deuxième palpeur et en ce qu'un des bras (2a/7), qui porte chacun desdits palpeurs (5/9) comporte lesdits moyens de mesure de leur déplacement angulaire.

4. Dispositif selon la revendication 3, caractérisé en ce que ledit deuxième palpeur (9) est situé entre le premier palpeur (5)

0123759

et l'organe de manutention (1) du câble (23).

5. Dispositif selon la revendication 4, caractérisé en ce que les bras (2a/2b -7/8), qui portent lesdits palpeurs (5/9) sont parallèles entre eux et en ce que les palpeurs (5/9) sont parallèles entre eux et sont cylindriques.

6. Dispositif selon la revendication 5, caractérisé en ce que l'axe (XX₁) d'articulation de ladite structure (2) est perpendiculaire à l'axe longitudinal de l'organe de manutention (1) du câble et s'étend dans une direction sensiblement horizontale , de telle sorte que lesdits palpeurs (5/9) se déplacent dans des directions sensiblement verticales.

7. Dispositif selon la revendication 6, caractérisé en ce que l'un des bras (2a), qui porte le premier palpeur (5) et l'un des bras (7), qui porte le second palpeur (9), se prolongent chacun du côté de l'organe de manutention (1) du câble, par une tige (12/15) dont l'extrémité libre se déplace au niveau d'un secteur (18) fixé audit organe (1).

8. Dispositif selon la revendication 7, caractérisé en ce que lesdites tiges (12/15) sont portées par les bras desdits palpeurs (5/9) situés d'un même côté dudit organe (1) de manutention du câble.

9. Dispositif selon la revendication 8, caractérisé en ce que lesdites tiges (12/15) sont montées réglables sur lesdits bras (2a/7) pour permettre l'étalonnage du dispositif en fonction du rayon de courbure minimal admissible du câble (23).

10. Dispositif selon la revendication 9, caractérisé en ce que l'un des bras (7), qui porte le deuxième palpeur (9) se prolonge sensiblement jusqu'à l'axe d'articulation (XX₁) des bras (2a/2b) dudit premier palpeur (5) et en ce que chacune desdites tiges (12/15) est fixée à une platine (13/16) réglable en rotation sur lesdits bras et située au niveau de l'axe d'articulation (XX₁) des bras (2a/2b) qui portent le premier palpeur (5).

11. Dispositif selon l'une quelconque des revendications 2 à 10, caractérisé en ce que les tiges (12/15) comportent à leur extrémité libre un curseur (21/22) constitué par un fer plat perpendiculaire à la tige, en ce que chaque curseur (21/22) est cintré suivant le rayon d'articulation de chacune des tiges et en ce que lesdits curseurs (21/22) sont l'un à côté de l'autre et sont situés sur le côté dudit secteur fixe (18), lequel est cintré dans le même sens et

3

0123759

sensiblement suivant la même courbure du curseur (21) qui lui est le plus rapproché.

12. Dispositif selon la revendication 11, caractérisé en ce que la face convexe (18b) du secteur fixe et la face convexe (21a/22a) de chacun des curseurs (21/22) comporte une ligne de référence transversale (18c/21b/22b).

13. Dispositif selon la revendication 12, caractérisé en ce que les zones (18d/18e – 21c/21d), situées de part et d'autre de la ligne de référence du secteur (18) et du curseur (21) qui lui est le plus rapproché sont de couleurs contrastées.

Fig-1

Fig. 3

Fig. 2

0123759

Fig-4

Office européen
des brevets

**RAPPORT DE RECHERCHE EUROPEENNE**

0123759
Numéro de la demande

EP    83 43 0016

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-A-2 449 813  (HOESCH WERKE AG) <br> * Figures 1,2; en entier * | 1 | G 01 B    5/20 <br> H 02 G    1/10 |
| | --- | | |
| A | FR-A-2 436 366  (J. FOURCADE) <br> * Figure 1; page 2, lignes 9-27 * | 1 | |
| | ----- | | |

DOMAINES TECHNIQUES RECHERCHES (Int. Cl. ³)

G 01 B    5/00
G 01 B    7/00
H 02 G    1/00
F 16 L    1/00

Le présent rapport de recherche a été établi pour toutes les revendications

| Lieu de la recherche <br> LA HAYE | Date d'achèvement de la recherche <br> 09-01-1984 | Examinateur <br> VISSER F.P.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82